# EUROPEAN PATENT APPLICATION

(11) **EP 1 009 174 A2**
(43) Date of publication of application: **14.06.2000**
(21) Application number: 99124477.3
(22) Date of filing: 08.12.1999
(51) Int. Cl.: H04Q 7/22, H04Q 7/32, H04L 29/06

(54) **Apparatus and method for realizing TFCI for multiservice in mobile communication system**

(30) Priority: 09.12.1998 KR 9853994
(71) Applicant: LG ELECTRONICS INC., Seoul (KR)
(72) Inventor: Hwang, In Tae, Pundang-gu, Songnam-shi, Kyonggi-do (KR); Shin, Sang Rim, Tongan-gu, Anyang-shi, Kyonggi-do (KR); Ok, Myoung Jin, Seoul (KR)
(74) Representative: von Samson-Himmelstjerna, Friedrich R., Dipl.-Phys.

(57) **Abstract**

In order to provide a multiservice in a mobile communication system for furnishing more various multiservice by embodying a transport format combination indicator(TFCI) containing a transport format indicator and by loading it on a dedicated physical data channel and transmitting it, the apparatus and method for realizing the TFCI for a multiservice in the mobile communication system which requests the multiservice by loading the transport format indicator having a recording of an outer coding, outer interleaving, inner coding, inner interleaving and rate matching system necessary for the multiservice and also by transmitting it through the dedicated channel, comprises the steps of: multiplexing the transport format indicators based on the multiservice and performing the rate matching; interleaving and converting the rate-matched signal into a coded composite transport channel and a demultiplexing and splitting system; and loading the signal on one or a plurality of dedicated physical data channels according to a rate of the converted signal and transmitting the TFCI, thereby providing more various multiservice by realizing a TFCI containing a transport format indicator, loading it on the dedicated physical control channel and transmitting it and detecting it from a network.

## Description

### BACKGROUND OF THE INVENTION

### Field of the Invention

The present invention relates to a mobile communication system, and more particularly, to an apparatus and method for realizing a TFCI for a multiservice in the mobile communication system.

### Discussion of Related Art

In a mobile communication system based on a conventional technique, in order that a mobile station requests a network to provide various multiservice such as a speech service, a circuit data service, a packet data service, etc., this request is performed by loading such service request on individual transport format indicators(TFI) and transmitting it through an uplink.

Then the network detects the TFI from a signal transmitted from the mobile station and individually provides its corresponding service through a downlink.

In the mobile communication system of the conventional technique, therefore, various multiservice can not be furnished since only an individual service corresponding to an individual service request transmitted from the mobile station is provided.

### SUMMARY OF THE INVENTION

Accordingly, the present invention is directed to an apparatus and method for realizing a TFCI for a multiservice in a mobile communication that substantially obviate one or more of the limitations and disadvantages of the related art.

A primary object of the present invention is to provide an apparatus and method for realizing a TFCI for a multiservice, in a mobile communication system for furnishing more various multiservice by embodying a transport format combination indicator(TFCI) containing a transport format indicator(TFI) and by loading it on a dedicated physical control channel and transmitting it.

Additional features and advantages of the invention will be set forth in the description which follows, and in part will be apparent from the description, or may be learned by practice of the invention. The objectives and other advantages of the invention will be realized and attained by the structure as illustrated in the written description and claims hereof, as well as the appended drawings.

To achieve these and other advantages, and in accordance with the purpose of the present invention as embodied and broadly described, in a mobile communication system which requests a multiservice by loading a plurality of transport format indicators(TFI) having a recording of an outer coding, outer interleaving, inner coding, inner interleaving and rate matching system necessary for the multiservice and by transmitting them through a dedicated channel, an apparatus for realizing a TFCI for the multiservice comprises a multiplexing part for multiplexing signals of a plurality of transport format indicators according to a control signal; a rate matching part for matching the signal multiplexed in the multiplexing part to a given rate; an interleaving part for interleaving the signal rate-matched in the rate matching part; a coded composite transport channel part for converting the signal interleaved in the interleaving part into a coded composite transport channel; a demultiplexing/splitting part for demultiplexing/splitting the signal converted in the coded composite transport channel part; and a dedicated physical data channel matching part for loading the signal demultiplexed/split in the demultiplexing/splitting part on one or a plural number of dedicated physical data channels to thereby transmit the TFCI.

To achieve the above object in accordance with the present invention, further, in the mobile communication system which requests the multiservice by loading a plurality of transport format indicators(TFI) having a recording of an outer coding, outer interleaving, inner coding, inner interleaving and rate matching system necessary for the multiservice and by transmitting them through a dedicated channel, a method for realizing the TFCI for the multiservice comprises the steps of: multiplexing the transport format indicators based on the multiservice and performing the rate matching; interleaving and converting the rate-matched signal into a coded composite transport channel and a demultiplexing/splitting system; and loading the signal on one or a plurality of dedicated physical data channels according to a rate of the converted signal to thereby transmit the TFCI.

The invention also has another characteristic that this transport format combination indicator(TFCI) contains the transport format indicator based on the multiservice, in addition to the above-mentioned characteristics.

That is to say, in the invention, a TFCI containing a TFI is embodied, loaded on a dedicated physical control channel and transmitted, and this TFCI is detected by a network to whereby provide more various multiservice in the mobile communication.

Other objects, characteristics and advantages of the invention will be apparent through the detailed description of embodiments referring to the accompanied drawing.

It is to be understood that both the foregoing general description and the following detailed description are exemplary and explanatory and are intended to provide further explanation of the invention as claimed.

### BRIEF DESCRIPTION OF THE ATTACHED DRAWINGS

The accompanying drawings, which are included to provide a further understanding of the invention and are incorporated in and constitute a part of this specification, illustrate embodiments of the invention and together with the description serve to explain the principles of the invention.

In the drawing:

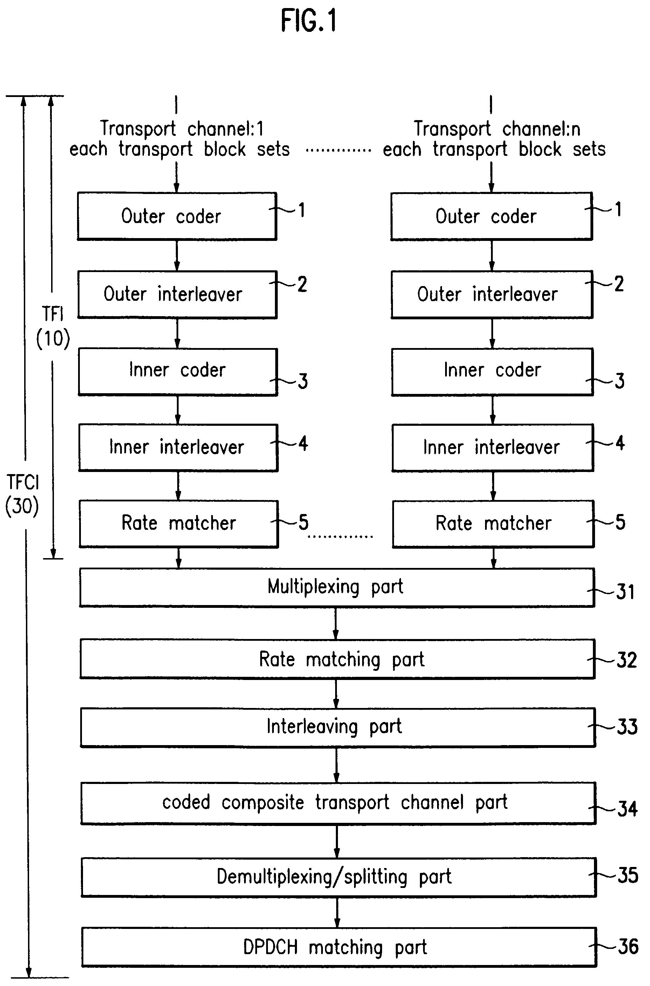

Fig. 1 represents one embodiment diagram showing a state of embodying a TFCI in an apparatus and method for realizing the TFCI for a multiservice in a mobile communication system in accordance with the present invention.

### DETAILED DESCRIPTION OF PREFERRED EMBODIMENT

Reference will now be made in detail to the preferred embodiments of the present invention, examples of which are illustrated in the accompanying drawings.

Fig. 1 indicates one embodiment diagram showing a state of embodying a TFCI in an apparatus and method for realizing the TFCI for a multiservice in a mobile communication system in accordance with the present invention, and this is constructed by a plural number of transport format indicators(TFI) 10 on which an outer coding, outer interleaving, inner coding, inner interleaving and rate matching system is formatted through an outer coder 1 for performing an outer coding for a separate service by a reed-solomon coding, an outer interleaver 2 for executing an outer interleaving on a signal coded in the outer coder 1, an inner coder 3 for performing an inner coding on the signal of the outer interleaver 2 by a convolutional coding, an inner interleaver 4 for executing an inner interleaving on the signal of the inner coder 3 and a rate matcher 5 for matching the signal of the inner leaver 4 to a given rate; a multiplexing part 31 for multiplexing signals of numerous transport format indicators(TFI) 10 according to a control signal; a rate matching part 32 for matching the signal multiplexed in the multiplexing part 31 to a given rate; an interleaving part 33 for interleaving the signal rate-matched in the rate matching part 32; a coded composite transport channel part 34 for converting the signal interleaved in the interleaving part 33 into a coded composite transport channel; a demultiplexing/splitting part 35 for demultiplexing/splitting the signal converted in the coded composite transport channel part 34; and a dedicated physical data channel matching part 36 for loading the signal demultiplexed/split in the demultiplexing/splitting part 35 on one or a plurality of dedicated physical data channels to transmit the TFCI.

In the conversion method into the multiplexing, rate matching, interleaving, coded composite transport channel and demultiplexing/splitting system, its recording on the TFCI 30 is first performed and this TFCI is then loaded on one or a plural number of the dedicated physical control channels, and also transmitted to the network.

The TFCI 30 contains a plurality of TFIs 10.

The apparat and method for realizing the TFCI for the multiservice in the inventive mobile communication system with such construction is described in detail as follows.

First, a mobile station records a formatting system based on respective service on a plural number of TFIs 10 in order to request a network to provide various multiservice such a speech service, a circuit data service, a packet data service, etc.

A MAC (Media Access Control) of the mobile station performs an outer coding for the respective multiservice through a reed-solomon coding in the outer coder 1, an outer interleaving for the coded signal in the outer interleaver 2, an inner coding through the convolution coding in the inner coder 3, and an inner interleaving in the inner interleaver 4, and then matches the signal to a given rate in the rate matcher 5. Further, the MAC of the mobile station individually records the formatting systems such as the outer coding, the outer interleaving, the inner coding, the inner interleaving and the rate matching, etc. on given areas of numerous TFIs 10, after that, transmits it to a layer 1.

The TFI 10 is a label for indicating a specific transport format provided within a transport format set.

The transport format combination set is defined as a set of the transport format combinations provided on the coded composite transport channel, wherein the transport format combination set is furnished to the MAC in order for a control operation. Meantime, an allocation for the transport format combination sets is performed by a layer 3. In case that data is mapped to the layer 1, the MAC selects it between other transport format combinations provided in the transport format combination set, and other thing between these transport format combinations is only a dynamic part, therefore thing the MAC can control, is only the dynamic part.

A semi-static part corresponds to a quality, namely, a bit error rate(BER) and a transfer delay, together with a target value for a layer 1 closed-loop power control.

Such service characteristic is provided by the layer 1.

Meanwhile, the layer 3 recognizes an execution of the layer 1 service, and has a responsibility for a layer 1(L1) configuration, namely, for a control in setting the semi-static part of transport formats. In addition, the layer 3 controls a target for the layer 1 closed-loop power control through an outer loop power control from which its power control is rather near to its quality control.

It is not surely necessary that the transport format combination set contains all possible transport format combinations formed by the transport formats of a corresponding transport channel, in other words, only permitted combinations are contained thereinto. Thereby, the maximum total bit rates provided on all the transport channels of one coded composite transport channel can be set adequately. Further, the contained transport formats can be gained by only the permitted transport format combinations not corresponding to high bit rates.

A selection of the transport format combinations can be provided with a fast part of a radio resource control, and a dedication of the fast parts in such radio resource control means that a flexible variable rate scheme provided by the layer 1 is usable sufficiently. These parts of the radio resource control can be distinguished from slower parts controlled by the layer 3. Therefore, a bit rate can be changed very rapidly even without any requirement of the layer 3.

The TFI 10 has characteristics of the dynamic part and the semi-static part, and in the characteristic of the dynamic part it is constructed by a transport block size, a transport block set size and a transport time interval, wherein the transport time interval is selected from only time division duplex(TDD).

Herewith the transport time interval is defined as an inter-arrival time of the transport block sets, namely, as a periodicity of one transport block set transmitted from the physical layer. The transport block is defined as a basic unit exchanged between the layer 1 and the MAC in order to process it on the layer 1, and this transport block corresponds to "MAC PDU", and it is available to be formed by a MAC peer-to-peer message in a time division duplexer(TDD) mode. Also the layer 1 adds a CRC on the respective transport blocks.

The transport block size is defined as a size of the transport block, namely, as the number of bits.

The transport block set is defined as a set of the transport blocks exchanged between the layer 1 and the MAC in an example of the same time when the same transport channels are used, and the transport block set corresponds to "MAC PDU Set". The transport block size set is defined as the number of bits within the transport block set.

The transport format is defined as a format furnished from the layer 1 to the MAC in order for a transmission of the transport block set during the transport time interval on the transport channel.

The transport format set is defined as a set of transport formats combined with the transport channel, and the semi-static parts of all the transport formats are same within one transport format set.

One among the transport format characteristics provided within the dynamic part is same as the characteristic provided within the transport format set. In two characteristics of the dynamic part, an instantaneous bit rate on the transport channel is formed efficiently, and also a variable bit rate on the transport channel is achieved by any one among them, namely, the transport block size becomes variable and any one among the transport blocks within the transport block set/the transport block set size is selected, and only one out of such parameters can be changed.

As the characteristics of the semi-static part there are a command for a frequency division duplex(FDD), a transmission time interval selected for the dynamic part of a time division duplex non-real time(NRT) bearer, and also a construction of a channel coding type and a rate matching, wherein the type of channel coding is composed of an outer coding, an outer interleaving, an inner coding and an inner interleaving.

The outer coding uses the reed-solomon coding, the outer interleaving performs a depth of the outer interleaving in radio frames, the inner coding uses the convolution coding, and the inner interleaving executes a depth of the inner interleaving in radio frames.

In addition, the mobile station multiplexes signals of numerous TFIs 10 having a recording of the formatting system according to the control signal through the multiplexing part 31, matches the with a given rate through the rate matching part 32, interleaves the signal through the interleaving part 33, converts it into the coded composite transport channel through the coded composite transport channel part 34, demultiplexes/splits it through the demultiplexing/splitting part 35, and performs a channel matching for it through the dedicated physical data channel matching part 36. Whereby the TFCI 30 is realized and loaded on one or a plurality of dedicated physical data channels according to a rate, and then transmitted to a network.

That is, in case the layer 1 L1 receives the TFI from the MAC, the layer 1 controls the coding, the interleaving and the rate matching of each transport channel according to the TFI, then all the transport channels are multiplexed, matched in rate and interleaved. Consequently, the coded composite transport channel CCTrCH is demultiplexed, split and mapped to one or a plurality of dedicated physical data channels.

The multiplexing part 31 multiplexes all the transport channels, and the coded transport channels are consecutively multiplexed into one radio frame in the multiplexing part 31.

The rate matching part 32 performs a dynamic rate matching in an uplink only, and this dynamic rate matching is performed on the basis of a frame-by-frame(10ms), after a multiplexing of parallel coded transport channels, by matching the total instantaneous rates of the multiplexed transport channels and a channel bit rate of an uplink DPDCH(Dedicated Physical Data Channel). The dynamic rate matching is also used for an unequal repetition in only the uplink. In a downlink, meanwhile, a discontinuous transmission is used in case that the total instantaneous rates of the multiplexed transport channels are not matched with the channel bit rate.

In the interleaving part 33, an inner intra-frame interleaving is executed and the inner intra-frame interleaving over one radio frame(10ms) is applied to a multiplexed set of the transport channels.

The demultiplexing/splitting part 35 performs a demultiplexing/splitting of the coded composite transport channel CCTrCH.

In one or a plurality of dedicated physical data channels, the multiplexing, rate matching, interleaving, conversion into the coded composite transport channel and demultiplexing/splitting system as the requested various multiservice is recorded on the TFCI 30, after that, is transmitted together with one or numerous dedicated physical control channels corresponding to one or a plurality of dedicated physical data channels, to the network.

Herewith, in this TFCI 30 a plural number of TFIs 10 are contained.

The TFCI 30 represents a current transport format combination, and one-to-one correspondence is gotten between an exact value of the TFCI 30 and an exact transport format combination. The TFCI 30 is used to inform a receiving side of a currently valid transport combination, that is, used to inform it of a method of deciding, demultiplexing and transmitting data received onto the adequate transport channels.

At this time, the MAC indicates the TFI through the layer 1 in each transmission of transport block sets provided on the respective transport channels, then the layer 1 determines the TFCI from the TFI of all the parallel transport channels of the mobile station, properly processes the transport blocks and adds the TFCI to a physical control signal. It is thus valid that a receiving party confirms the transport format combination through a search of the TFCI. By restricted transport format combination sets a transport format combination indicator signal may be omitted instead of depending upon its required blind detection, and despite of that, the receiving party can decide information from the allotted transport format combinations and can get all information necessary for a transmission to the MAC through an appropriate transport channel. Herewith, the multiplexed and exactly rate-matched pattern is based on a decided rule and can be taken out of a transmitter and a receiver even without a signal concerned with a radio interface.

Then, the network detects one or a plural number of the dedicated physical control channels from the signal transmitted from the mobile station, after that, searches for the TFCI 30, converts one or a plurality of the dedicated physical data channels through an inverse procedure of the formatting system as above-mentioned, and then furnishes its corresponding multiservice.

In accordance with the present invention, as aforementioned, in an apparatus and method for realizing a TFCI for a multiservice in a mobile communication system, the TFCI containing a TFI is embodied, loaded on a dedicated physical control channel, and transmitted, then this TFCI is detected by a network, to whereby provide a multiservice in a mobile communication system for furnishing more various multiservice.

It will be apparent to those skilled in the art that various modifications and variations can be made in the apparatus and method for realizing the TFCI for the multiservice in the mobile communication in the present invention without deviating from the spirit or scope of the invention. Thus, it is intended that the present invention cover the modifications and variations of this invention provided they come within the scope of the appended claims and their equivalents.

## Claims

1. An apparatus for realizing a transport format combination indicator(TFCI) for a multiservice in a mobile communication system which requests the multiservice by loading a plurality of transport format indicators(TFI) having a recording of an outer coding, outer interleaving, inner coding, inner interleaving and rate matching system conformed with the multiservice and by transmitting them through a dedicated channel, said apparatus comprising:
a multiplexing part for multiplexing signals of a plurality of the transport format indicators according to a control signal;
a rate matching part for matching the signal multiplexed in said multiplexing part to a given rate;
an interleaving part for interleaving the signal rate-matched in the rate matching part;
a coded composite transport channel part for converting the signal interleaved in the interleaving part into a coded composite transport channel;
a demultiplexing/splitting part for demultiplexing/splitting the signal converted in the coded composite transport channel part; and
a dedicated physical data channel matching part for loading the signal demultiplexed/split in the demultiplexing/splitting part on one or a plural number of dedicated physical data channels and transmitting the TFCI.

2. A method of realizing a transport format combination indicator(TFCI) for a multiservice in a mobile communication system which requests the multiservice by loading a plurality of transport format indicators(TFI) having a recording of an outer coding, outer interleaving, inner coding, inner interleaving and rate matching system conformed with the multiservice and by transmitting them through a dedicated channel, said method comprising the steps of:
multiplexing the transport format indicators based on said multiservice and performing a rate matching for them;
interleaving and converting the rate-matched signal into a coded composite transport channel and a demultiplexing/splitting system; and
loading the signal on one or a plurality of dedicated physical data channels according to a rate of the converted signal and transmitting the TFCI.

3. The method of claim 2, wherein said TFCI contains the transport format indicator(TFI) based on the multiservice.
